# EUROPEAN PATENT SPECIFICATION

(11) **EP 3 981 719 B1**
(45) Date of publication and mention of the grant of the patent: **09.12.2026**
(21) Application number: 19935304.6
(22) Date of filing: 30.11.2019
(51) Int. Cl.: B65H 35/00, B26D 5/00, B26D 5/32, B26D 5/34, G05B 19/416

(54) **DECELERATION CUTTING CONTROL METHOD AND CONTROL APPARATUS**
VERFAHREN UND VORRICHTUNG ZUR STEUERUNG VON SCHNEIDEN NACH ENTSCHLEUNIGUNG
PROCÉDÉ DE COMMANDE DE DÉCOUPE PAR DÉCÉLÉRATION ET APPAREIL DE COMMANDE

(30) Priority: 28.06.2019 CN 201910574818
(43) Date of publication of application: 13.04.2022
(73) Proprietor: Guangdong Lyric Robot Automation Co., Ltd., Huicheng District Huizhou Guangdong 516000 (CN)
(72) Inventor: ZHOU, Junjie, Guangdong 516000 (CN); ZHOU, Minglang, Guangdong 516000 (CN); CAI, Wenjie, Guangdong 516000 (CN); XU, Tianfeng, Guangdong 516000 (CN); LI, Feng, Guangdong 516000 (CN)
(74) Representative: Purdylucey Intellectual Property
(86) International application number: PCT/CN2019/122244
(87) International publication number: WO 2020/258722

(56) References cited:
- CN-A- 101 130 413
- CN-A- 104 708 104
- CN-A- 109 332 910
- CN-A- 110 329 832
- GB-A- 2 491 080
- JP-A- 2001 312 309
- JP-A- 2021 017 310
- JP-A- H0 671 588
- US-A- 4 163 405
- US-A- 5 041 070
- US-A- 5 079 981
- SLINGLAND E ET AL: "MOTION CONTROL HELPS IN WEB REGISTRATION", CONTROL ENGINEERING, REED BUSINESS INFORMATION, HIGHLANDS RANCH, CO, US, vol. 36, no. 3, 1 March 1989 (1989-03-01), pages 76/77, XP000047970, ISSN: 0010-8049

## Description

### TECHNICAL FIELD

The present application relates to the field of cutting control technologies, and more particularly, to a deceleration cutting control method and a control apparatus.

### BACKGROUND

In a process of conveying a to-be-cut product for cutting, it is usually necessary to consider an influence of a conveying speed of the to-be-cut product on a cutting accuracy, so as to ensure a cutting quality. For example, during manufacturing of a lithium battery cell, it is usually necessary to wind whole rolls of positive and negative plates and diaphragms into the cell by a full-automatic winding machine, and main operation processes of the full-automatic winding machine comprise input, pre-winding and winding of the positive and negative plates and diaphragms, cutting of the plates and diaphragms, station change, taping and blanking. A running speed of the positive and negative plates is usually uncontrollable during operation of the full-automatic winding machine, and the running speed of the positive and negative plates not only directly affects a stability of the full-automatic winding machine, but also leads to a poor cutting accuracy of the plates when the positive and negative plates need to be cut, so that a quality of the wound cell cannot be guaranteed, and a yield of the cell is affected.

GB2491080A discloses a sheet processing device which enhances processing capability per hour to enable the processing treatment at high speed. Specifically disclosed is a sheet processing device which is provided with: a sheet conveying means for conveying a certain sheet and the next sheet one by one along a sheet conveying path while maintaining a predetermined interval therebetween; a sheet position detecting means for detecting a sheet position on the sheet conveying path by detecting the front ends or the rear ends of the sheets supplied from a sheet supplying means; a plurality of processing means which are disposed on the sheet conveying path so as to apply predetermined processing to the sheets; an information reading means for reading information associated with the processing operation which should be applied to the sheets by the processing means; and a control means for controlling operations associated with the sheet conveying means, the sheet position detecting means, the plurality of processing means, and the information reading means, wherein, if the control means determines that the certain sheet has passed through a certain processing means on the basis of the sheet position detected by the sheet position detecting means, the control means controls to adjust the lateral position of the certain processing means in such a manner as to adapt to the processing operation relative to the next sheet. Specially, paragraph [0051] of GB2491080A discloses: "Even if it is detected that a paper sheet 100 being transferred at high speed has actually passed through the auxiliary position detecting sensors 48 and 50, the paper sheet 100 cannot be stopped immediately at the moment of the detection (in other words, a slow-down distance is required until the paper sheet 100 stops) Hence, it is preferable that the auxiliary position detecting sensors 48 and 50 should be disposed on the upstream sides of the slitting devices 22a and 26a. instead of being disposed immediately behind the downstream sides thereof in consideration of the slow-down distance." That is, the authors of GB2491080A are aware of the existence of lag, but they do not disclose how to use this lag to improve the accuracy of cutting paper sheet 100.

US5079981A discloses an apparatus for cutting the leading and trailing edges of an opaque sheet angling initially at an offset angle with respect to a cutting blade includes a pair of light sources and a pair of light sensors opposite said light sources. An opaque sheet to be cut is moved at right angles to a line extending between said pairs of light source and sensors to bring said article edges to and past said pairs of light sources and sensors. The sensors produce article edge angle indicating signals which indicate the time difference each edge reaches said pair of sensors. Means are provided responsive to said signals which adjust the blade angle to be parallel to each article edge so the blade cuts parallel to each edge. The angle indicating could be signals which are a direct measure of the difference in times each edge reaches the sensors. However, they are preferably derived from sensors measuring the relative amounts of light at a snapshot time passing through slots partially covered to different degrees by the sheet edge portion involved when the edge being measured is at an angle to said line.

US5041070A discloses a bag machine, which includes a programmed logic controller intermittently actuating a web feed draw roll motor for controlled web feed during the inoperative period of a cycled seal bar. The controller has separate inputs for the seal bar periods and a web length and establishes a control program of a preferred motion profile, with acceleration and deceleration of the fixed rolls to match the bag length to the available time using the total time available, with acceleration to a maximum and deceleration to reference, with or without a constant speed period. The bag length and time is monitored each machine cycle to calculate the next motion profile and permit changes in the bag length without machine shut-down. A programmed registered mode of control responds to a web mark spacing relative to the seal bar. In the registered mode, a photoscanner detects the mark during a constant speed web feed period prior to the end of the available time and actuates the web feed accordingly. If actual draw roll motion differs from the programmed motion profile, a fault signal may shut-down the machine. Manual control and inputs are provided for setup and for manual machine operations. The controller may vary the length of every other bag slightly to spaced hot seams from each other and permits stacking of the bags. A programmed reverse drive withdraws the web slightly from the seal bar to prevent sticking of the web to the seal bar.

US4163405A discloses an automatic photographic paper cutter cuts photographic prints from a strip of photographic paper which bears cut indicia indicating the locations of desired paper cuts. An indicia sensor is positioned in fixed relationship with respect to the paper cutter knife assembly at a distance less than the shortest length of print to be cut. The paper cutter derives and stores a feed-after-sense signal, which represents the length the paper strip must be fed after a cut indicium is sensed in order for the strip to be cut at the desired cut location represented by that cut indicium. During automatic operation of the paper cutter, the photographic paper strip is advanced until a cut indicium is sensed, is advanced by an additional distance determined by the feed-after-sense signal, is stopped, and is cut at the desired cut location.

ISSN 00108049 discloses that the sensors may become blind if the registration mark on the web is moving at high speed and it gives certain control methods to avoid the negative effect when the sensors become blind.

### SUMMARY

Aiming at the defects in the existing technology, the present application provides a deceleration cutting control method and a control apparatus as set out in the attached claims.

In the deceleration cutting control method and the cutting apparatus of the present application, conveying the to-be-cut product to the predetermined position or receiving the deceleration signal is used as a control signal for deceleration of the to-be-cut product, which means that as long as any one of the control signal of conveying the to-be-cut product to the predetermined position and the control signal of receiving the deceleration signal is received, the to-be-cut product is decelerated according to the preset deceleration curve. Moreover, the deceleration curve is preset in advance according to actual situations, such as a length of the to-be-cut product, a cutting position of the to-be-cut product, a conveying speed of the to-be-cut product, and a conveying range in which a cutting part may be operated normally, so that the preset deceleration curve may be planned flexibly. The to-be-cut product is decelerated according to the preset deceleration curve, and a more optimized deceleration curve may be obtained according to the actual situations, so that it is ensured that the to-be-cut product is decelerated according to the deceleration curve, the deceleration time is shortened, and the deceleration efficiency is improved.

Further, in the deceleration cutting control method of the present application, the deceleration curve is preset in the uniform deceleration conveying mode by using the speed before the deceleration and the speed after the deceleration of the to-be-cut product according to the actual situations, so that cutting control is simple and easy. Moreover, according to the preset deceleration curve of uniform deceleration, the deceleration distance corresponding to the deceleration curve may be calculated conveniently, and an influence on a cutting accuracy caused by possible lag of actual deceleration is fully considered. The deceleration distance is determined through the lag coefficient and the theoretical value of the deceleration distance. Furthermore, after finishing deceleration, the to-be-conveyed compensation distance of the cutting part is calculated according to a distance relationship between a range in which the cutting part may be conveyed normally and the cutting position of the to-be-cut product, and the cutting position of the to-be-cut product is cut accurately, thereby achieving the purpose of accurate cutting.

### BRIEF DESCRIPTION OF THE DRAWINGS

The drawings described herein are used for providing further understanding for the present application, and constitute a part of the present application. Exemplary embodiments of the present application and the descriptions thereof are used for explaining the present application, and do not constitute any inappropriate limitation to the present application. In the drawings:
FIG. 1 is a flow chart of a deceleration cutting control method in Embodiment 1; and
FIG. 2 is a schematic diagram of a deceleration curve in Embodiment 1.

### DETAILED DESCRIPTION

The multiple embodiments of the present application will be disclosed hereinafter by the drawings, and in order to explain clearly, many practical details will be explained in the following descriptions. However, it should be understood that these practical details should not be used to limit the present application. That is to say, in some embodiments of the present application, these practical details are unnecessary. In addition, in order to simplify the drawings, some conventional structures and assemblies will be shown in the drawings in a simple schematic mode.

In addition, the descriptions involving "first" and "second" in the present application are used for descriptive purposes only instead of specifically referring to the order or sequence or limiting the present application, are only intended to distinguish the assemblies or operations described in the same technical terms, and cannot be understood as indicating or implying relative importance, or implicitly indicating the number of technical features indicated thereby.

### Embodiment 1

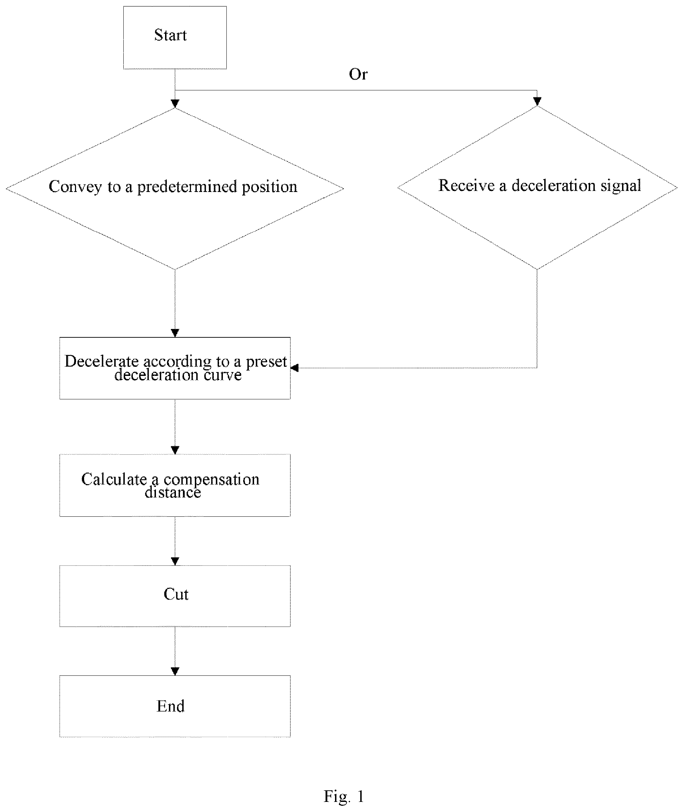

The embodiment provides a deceleration cutting control method, and FIG. 1 is a flow chart of the deceleration cutting control method in the embodiment. The deceleration cutting control method in the embodiment includes the following steps of: when a to-be-cut product is conveyed to a predetermined position or a deceleration signal is received, decelerating the to-be-cut product according to a preset deceleration curve; and when the to-be-cut product is decelerated according to the preset deceleration curve, cutting the to-be-cut product. That is, when any one of conditions that the to-be-cut product is conveyed to the predetermined position and the deceleration signal is received is satisfied, the to-be-cut product may be decelerated according to the preset deceleration curve. For example, when the to-be-cut product is conveyed to the predetermined position but the deceleration signal is not received, the to-be-cut product may be decelerated according to the preset deceleration curve, or when the deceleration signal is received but a signal that the to-be-cut product is conveyed to the predetermined position is not received, the to-be-cut product may also be decelerated according to the preset deceleration curve. Conveying the to-be-cut product to the predetermined position or receiving the deceleration signal is used as a control signal for deceleration of the to-be-cut product, which means that as long as any one of the control signal of conveying the to-be-cut product to the predetermined position and the control signal of receiving the deceleration signal is received, the to-be-cut product is decelerated according to the preset deceleration curve, and the two control signals are used together to improve a cutting accuracy. In addition, the deceleration curve may be preset flexibly according to actual situations, such as a length of the to-be-cut product, a cutting position of the to-be-cut product, a conveying speed of the to-be-cut product, a conveying range in which a cutting part may be operated normally and other factors.

The step of when the to-be-cut product is conveyed to the predetermined position, decelerating the to-be-cut product according to the preset deceleration curve includes: acquiring a to-be-conveyed remaining distance of the to-be-cut product first, and when the to-be-conveyed remaining distance of the to-be-cut product is matched with a deceleration distance corresponding to the deceleration curve, decelerating the to-be-cut product according to the preset deceleration curve. The to-be-conveyed remaining distance of the to-be-cut product may be obtained in the following mode: the to-be-cut product may usually be wound on a roller, and a detecting element is mounted on the roller. When the to-be-cut product is conveyed through the roller, the detecting element such as an encoder may detect a rotating angle of the roller and output a corresponding pulse, which means that the detecting element outputs a measured output value, and a conveyed distance of the to-be-cut product is calculated according to the measured output value of the detecting element. Since a total length of the to-be-cut product is known, the to-be-conveyed remaining distance of the to-be-cut product may be acquired according to the total length of the to-be-cut product and the conveyed distance of the to-be-cut product.

**In** order to facilitate planning the deceleration curve, the deceleration curve is preset in a uniform deceleration conveying mode. Specifically, a reasonable and optimal deceleration curve is calculated according to actual situations, such as a length of the to-be-cut product, a cutting position of the to-be-cut product, a conveying speed of the to-be-cut product, and a conveying range in which a cutting part may be operated normally first. The deceleration curve is preset according to the calculated reasonable and optimal deceleration curve, and the preset deceleration curve satisfies a uniform deceleration motion. Therefore, cutting control is simple and easy, and according to the preset uniform deceleration curve, it is convenient to calculate the deceleration distance corresponding to the deceleration curve, so that it is more convenient to determine that the to-be-conveyed remaining distance of the to-be-cut product is matched with the deceleration distance corresponding to the deceleration curve.

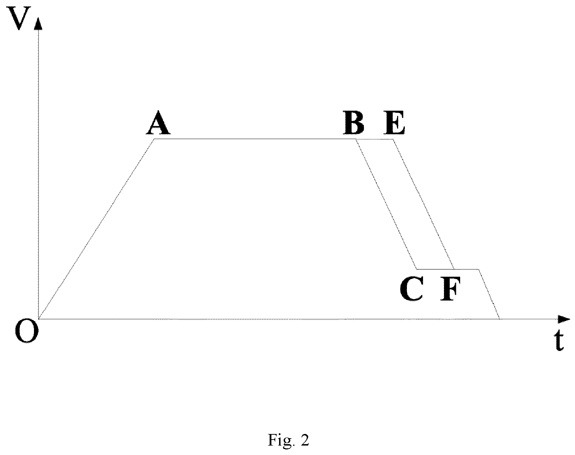

FIG. 2 is a schematic diagram of the deceleration curve in the embodiment. **In** order to prevent actual deceleration from lagging behind to affect the cutting accuracy, the deceleration cutting control method in the embodiment further includes the steps of: presetting a lag coefficient b, and obtaining the deceleration distance corresponding to the deceleration curve according to a formula S×b = (V₂²-V₁²)b/2a, where V₂ is a speed before the deceleration, V₁ is a speed after the deceleration, a is a deceleration speed, and S is a theoretical value of the deceleration distance. The lag coefficient b satisfies that 1<b<1.5. As shown in FIG. 2, V is the conveying speed of the to-be-cut product, t is a conveying time of the to-be-cut product, an OA segment is an initial conveying stage of the to-be-cut product, an AB segment is a middle conveying stage of the to-be-cut product, a BC segment is the preset deceleration curve, and an EF segment is an actual deceleration curve of the to-be-cut product. When conveying the to-be-cut product in the AB segment is finished, the to-be-cut product is conveyed to the predetermined position or the deceleration signal is received, and the to-be-cut product is conveyed according to the preset deceleration curve. Due to the lag between the preset deceleration curve and the actual deceleration curve, an influence of the lag is fully considered when the deceleration curve is preset, so that the lag coefficient b is preset to prevent the deceleration lag from affecting the cutting accuracy. The deceleration distance and the lag coefficient b may both be set through a man-machine interface.

The deceleration cutting control method in the embodiment further includes the steps of: calculating a compensation distance, so that the cutting part moves to a cutting position of the to-be-cut product according to the calculated compensation distance, and accurately cutting the cutting position of the to-be-cut product. Specifically, when the to-be-cut product is decelerated according to the preset deceleration curve, the to-be-moved compensation distance of the cutting part is calculated first, then the cutting part moves to the cutting position of the to-be-cut product according to the compensation distance, and the cutting part cuts the cutting position of the to-be-cut product. The compensation distance is calculated according to the conveyed distance of the to-be-cut product calculated based on the measured output value of the detecting element. Since the operational conveying range of the cutting part is fixed, when the cutting position of the to-be-cut product exceeds the operational conveying range of the cutting part, the cutting part cannot finish cutting the cutting position of the to-be-cut product. However, in the embodiment, by considering factors affecting the cutting accuracy in advance and presetting the deceleration curve in advance, the to-be-cut product is decelerated according to the deceleration curve, which avoids the cutting position of the to-be-cut product exceeding a line from exceeding the operational conveying range of the cutting part, and implements accurate cutting of the cutting position of the to-be-cut product, thereby achieving the purpose of accurate cutting.

To sum up, in the deceleration cutting control method in the embodiment, conveying the to-be-cut product to the predetermined position or receiving the deceleration signal is used as a control signal for deceleration of the to-be-cut product, which means that as long as any one of the control signal of conveying the to-be-cut product to the predetermined position and the control signal of receiving the deceleration signal is received, the to-be-cut product is decelerated according to the preset deceleration curve. Moreover, the deceleration curve is preset in advance according to actual situations, such as a length of the to-be-cut product, a cutting position of the to-be-cut product, a conveying speed of the to-be-cut product, and a conveying range in which a cutting part may be operated normally, so that the preset deceleration curve may be planned flexibly. The to-be-cut product is decelerated according to the preset deceleration curve, and a more optimized deceleration curve may be obtained according to the actual situations, so that it is ensured that the to-be-cut product is decelerated according to the deceleration curve, the deceleration time is shortened, and the deceleration efficiency is improved. In the embodiment, the deceleration curve is preset in the uniform deceleration conveying mode by using a speed before the deceleration and a speed after the deceleration of the to-be-cut product according to the actual situations, so that cutting control is simple and easy. The deceleration distance is determined by the lag coefficient and the theoretical value of the deceleration distance. After finishing deceleration, the to-be-moved compensation distance of the cutting part is calculated according to the conveyed distance of the to-be-cut product calculated based on the measured output value of the detecting element, thereby achieving the purpose of accurate cutting.

### Embodiment 2

The embodiment provides a deceleration cutting control apparatus, which includes a conveying part, a detecting element, a sensor, a controller, and a cutting part. The conveying part is used for conveying a to-be-cut product, and the conveying part includes a main drive motor, a winding motor and a plurality of rollers. The detecting element is used for detecting a conveying state of the conveying part, and the detecting element includes an encoder. The encoder is mounted on one of the rollers, and the encoder measures a rotating angle or a number of rotating turns of the rollers and outputs a pulse signal according to the rotating angle or the number of rotating turns measured. The sensor is used for sensing the to-be-cut product and transmitting a deceleration signal, and the sensor may be a deceleration photoelectric sensor. When sensing that to-be-cut product enters a sensing range, the sensor transmits the deceleration signal.

The controller determines whether the to-be-cut product is conveyed to a predetermined position according to the conveying state of the conveying part or the deceleration signal is received, and when the to-be-cut product is conveyed to the predetermined position or the deceleration signal is received, controls the conveying part to decelerate according to a preset deceleration curve. When determining whether the to-be-cut product is conveyed to the predetermined position, the controller acquires a to-be-conveyed remaining distance of the to-be-cut product first, and when the to-be-conveyed remaining distance of the to-be-cut product is matched with a deceleration distance corresponding to the deceleration curve, the to-be-cut product is decelerated according to the preset deceleration curve. A conveyed distance of the to-be-cut product may be calculated according to a measured output value of the detecting element, and the to-be-conveyed remaining distance of the to-be-cut product is acquired according to a total length of the to-be-cut product and the conveyed distance of the to-be-cut product. For example, when receiving the pulse signal transmitted by the encoder, the controller determines whether the to-be-cut product is conveyed to the predetermined position according to the pulse signal. Specifically, the controller may calculate the conveyed distance of the to-be-cut product according to the pulse signal, and calculate and acquire the to-be-conveyed remaining distance of the to-be-cut product according to the total length of the to-be-cut product and the conveyed distance of the to-be-cut product. When the to-be-conveyed remaining distance of the to-be-cut product is matched with a deceleration distance corresponding to the deceleration curve, the to-be-cut product is decelerated according to the preset deceleration curve. In the embodiment, the preset deceleration curve is set according to a uniform deceleration conveying mode. In order to avoid an influence of conveying lag, the controller is also provided with a lag coefficient through a man-machine interface, which means that the lag coefficient is stored in the controller in advance, and the deceleration distance corresponding to the deceleration curve is obtained according to a formula S×b = (V₂ ²-V₁ ²)b/2a, where V₂ is a speed before the deceleration, V₁ is a speed after the deceleration, a is a deceleration speed, and S is a theoretical value of the deceleration distance. The b satisfies that 1<b<1.5.

The cutting part is used for cutting the to-be-cut product. The cutting part may be a cutter. In the embodiment, the deceleration cutting control apparatus further includes a compensation drive part, and the compensation drive part includes a compensation motor and a cutter cylinder. When the to-be-cut product is decelerated according to the preset deceleration curve, the controller also calculates a to-be-moved compensation distance of the cutting part and controls the compensation drive part to drive the cutting part to move to the to-be-cut product according to the compensation distance, so that the cutting part cuts the to-be-cut product.

The above descriptions are merely embodiments of the present application, and are not intended to limit the present application.

## Claims

1. A deceleration cutting control method for accurately cutting a cutting position of a product, comprising:
presetting a deceleration curve according to a uniform deceleration conveying mode;
using a deceleration cutting control apparatus for a full-automatic winding machine, and the deceleration cutting control apparatus comprising:
a conveying part, used for conveying the product; wherein the product is wound on a roller and the product is with a total length;
a detecting element, used for detecting a conveying state of the conveying part and mounted on the roller; wherein the detecting element is configured to detect a rotating angle of the roller and output a pulse;
a sensor, used for sensing the product and transmitting a deceleration signal;
a controller, used for determining whether the product is conveyed to a predetermined position according to the conveying state of the conveying part or the received deceleration signal, and when the product is conveyed to the predetermined position or the deceleration signal is received, controlling the conveying part to decelerate according to the preset deceleration curve; and
a cutting part, used for cutting the product;
wherein the deceleration cutting control method further comprises:
in response to a product being conveyed to a predetermined position or a deceleration signal being received, decelerating the product according to the preset deceleration curve; and
in response to the product being decelerated according to the preset deceleration curve, cutting the product;
wherein the method further comprises: presetting a lag coefficient b, and obtaining the deceleration distance corresponding to the preset deceleration curve according to a formula S×b = (V₂²-V₁²)b/2a, where V₂ is a speed before the deceleration, V₁ is a speed after the deceleration, a is a deceleration speed, and S is a theoretical value of the deceleration distance;
wherein the lag coefficient b satisfies 1<b<1.5;
**characterized in that**, in response to a product being conveyed to a predetermined position or a deceleration signal being received, decelerating the product according to the preset deceleration curve comprises:
acquiring a remaining conveying distance of the product, and in response to the remaining conveying distance of the product being matched with a deceleration distance corresponding to the preset deceleration curve, decelerating the product according to the preset deceleration curve;
wherein acquiring the remaining conveying distance of the product comprises: calculating a conveyed distance of the product according to a measured output value of a detecting element, and acquiring the remaining conveying distance of the product according to the total length of the product and the conveyed distance of the product;
the method further comprises: in response to the product being decelerated according to the preset deceleration curve, calculating a compensation movement distance of a cutting part; and allowing the cutting part to move to a cutting position of the product according to the compensation movement distance, and cutting, by the cutting part, the cutting position of the product;
wherein, the product is a positive and negative plate of a lithium battery cell.

2. The deceleration cutting control method of claim 1, wherein calculating a compensation movement distance of a cutting part comprises: calculating the compensation movement distance of the cutting part according to the conveyed distance of the product calculated based on the measured output value of the detecting element.

3. A deceleration cutting control apparatus for accurately cutting a cutting position of a product and for a full-automatic winding machine, the deceleration cutting control apparatus comprising:
a conveying part, used for conveying the product; wherein the product is wound on a roller and the product is with a total length;
a detecting element, used for detecting a conveying state of the conveying part and mounted on the roller; wherein the detecting element is configured to detect a rotating angle of the roller and output a pulse;
a sensor, used for sensing the product and transmitting a deceleration signal;
a controller, used for determining whether the product is conveyed to a predetermined position according to the conveying state of the conveying part or the received deceleration signal, and when the product is conveyed to the predetermined position or the deceleration signal is received, controlling the conveying part to decelerate according to a preset deceleration curve, which comprises: acquiring a remaining conveying distance of the product, and in response to the remaining conveying distance of the product being matched with a deceleration distance corresponding to the preset deceleration curve, decelerating the product according to the preset deceleration curve; wherein the preset deceleration curve is preset according to a uniform deceleration conveying mode; and
a cutting part, used for cutting the product;
wherein the preset deceleration curve is given by formula S×b = (V₂²-V₁²)b/2a, wherein b is a preset lag coefficient, V₂ is a speed before the deceleration, V₁ is a speed after the deceleration, a is a deceleration speed, and S is a theoretical value of the deceleration distance;
wherein the lag coefficient b satisfies that 1<b<1.5;
**characterized in that**, when the product is conveyed to the predetermined position or the deceleration signal is received, controlling the conveying part to decelerate according to a preset deceleration curve comprises:
acquiring a remaining conveying distance of the product, and in response to the remaining conveying distance of the product being matched with a deceleration distance corresponding to the preset deceleration curve, decelerating the product according to the preset deceleration curve; wherein the preset deceleration curve is preset according to a uniform deceleration conveying mode;
wherein the deceleration cutting control apparatus further comprises a compensation drive part including a compensation motor and a cutter cylinder, wherein in response to the product being decelerated according to the preset deceleration curve, the controller calculates a compensation movement distance of the cutting part and controls the compensation drive part to drive the cutting part to move to the product according to the compensation movement distance, so that the cutting part cuts the product;
wherein, the product is a positive and negative plate and diaphragm of a lithium battery cell.

## Patentansprüche

1. Verzögerungsschnittsteuerungsverfahren zum genauen Schneiden eines Produkts an einer Schnittposition, das Folgendes umfasst:
Voreinstellen einer Verzögerungskurve gemäß einem Modus einer Beförderung mit gleichmäßiger Verzögerung;
Verwenden einer Verzögerungsschnittsteuerungsvorrichtung für eine vollautomatische Wickelmaschine, wobei die Verzögerungsschnittsteuerungsvorrichtung Folgendes umfasst:
ein Förderteil, das dazu verwendet wird, das Produkt zu befördern; wobei das Produkt auf eine Walze gewickelt ist und das Produkt eine Gesamtlänge aufweist;
ein Detektionselement, das dazu verwendet wird, einen Förderzustand des Förderteils zu detektieren, und auf der Walze montiert ist; wobei das Detektionselement dazu ausgebildet ist, einen Drehwinkel der Walze zu detektieren und einen Impuls auszugeben;
einen Sensor, der dazu verwendet wird, das Produkt zu erfassen und ein Verzögerungssignal zu übertragen;
eine Steuerung, die dazu verwendet wird, gemäß dem Förderzustand des Förderteils oder dem empfangenen Verzögerungssignal zu bestimmen, ob das Produkt zu einer vorgegebenen Position befördert wird, und, wenn das Produkt zu der vorgegebenen Position befördert wird oder das Verzögerungssignal empfangen wird, das Förderteil derart anzusteuern, dass dieses gemäß der voreingestellten Verzögerungskurve verzögert wird; und
ein Schneidteil, das dazu verwendet wird, das Produkt zu schneiden;
wobei das Verzögerungsschnittsteuerungsverfahren ferner Folgendes umfasst:
als Reaktion darauf, dass ein Produkt zu einer vorgegebenen Position befördert wird oder ein Verzögerungssignal empfangen wird, Verzögern des Produkts gemäß der voreingestellten Verzögerungskurve; und
als Reaktion darauf, dass das Produkt gemäß der voreingestellten Verzögerungskurve verzögert wird, Schneiden des Produkts;
wobei das Verfahren ferner Folgendes umfasst: Voreinstellen eines Lag-Koeffizienten b und Erhalten der mit der voreingestellten Verzögerungskurve korrespondierenden Verzögerungsstrecke gemäß der Formel S×b = (V₂²-V₁²)b/2a, wobei V₂ eine Geschwindigkeit vor der Verzögerung, V₁ eine Geschwindigkeit nach der Verzögerung, a eine Verzögerungsgeschwindigkeit und S ein theoretischer Wert der Verzögerungsstrecke ist;
wobei der Lag-Koeffizient b 1<b<1,5 erfüllt;
**dadurch gekennzeichnet, dass** das Verzögern des Produkts gemäß der voreingestellten Verzögerungskurve als Reaktion darauf, dass ein Produkt zu einer vorgegebenen Position befördert wird oder ein Verzögerungssignal empfangen wird, Folgendes umfasst:
Erfassen einer Restförderstrecke des Produkts und als Reaktion darauf, dass die Restförderstrecke des Produkts mit einer mit der voreingestellten Verzögerungskurve korrespondierenden Verzögerungsstrecke übereinstimmt, Verzögern des Produkts gemäß der voreingestellten Verzögerungskurve;
wobei das Erfassen der Restförderstrecke des Produkts Folgendes umfasst: Berechnen einer zurückgelegten Strecke des Produkts gemäß einem gemessenen Ausgabewert eines Detektionselements und Erfassen der Restförderstrecke des Produkts gemäß der Gesamtlänge des Produkts und der zurückgelegten Strecke des Produkts;
wobei das Verfahren ferner Folgendes umfasst: als Reaktion darauf, dass das Produkt gemäß der voreingestellten Verzögerungskurve verzögert wird, Berechnen einer Kompensationsbewegungsstrecke eines Schneidteils; und Zulassen, dass sich das Schneidteil gemäß der Kompensationsbewegungsstrecke zu einer Schnittposition des Produkts hin bewegt, und Schneiden des Produkts an der Schnittposition durch das Schneidteil;
wobei das Produkt eine positive und eine negative Platte einer Lithiumbatteriezelle ist.

2. Verzögerungsschnittsteuerungsverfahren nach Anspruch 1, wobei das Berechnen einer Kompensationsbewegungsstrecke eines Schneidteils Folgendes umfasst: Berechnen der Kompensationsbewegungsstrecke des Schneidteils gemäß der basierend auf dem gemessenen Ausgabewert des Detektionselements berechneten zurückgelegten Strecke des Produkts.

3. Verzögerungsschnittsteuerungsvorrichtung zum genauen Schneiden eines Produkts an einer Schnittposition und für eine vollautomatische Wickelmaschine, wobei die Verzögerungsschnittsteuerungsvorrichtung Folgendes umfasst:
ein Förderteil, das dazu verwendet wird, das Produkt zu befördern; wobei das Produkt auf eine Walze gewickelt ist und das Produkt eine Gesamtlänge aufweist;
ein Detektionselement, das dazu verwendet wird, einen Förderzustand des Förderteils zu detektieren, und auf der Walze montiert ist; wobei das Detektionselement dazu ausgebildet ist, einen Drehwinkel der Walze zu detektieren und einen Impuls auszugeben;
einen Sensor, der dazu verwendet wird, das Produkt zu erfassen und ein Verzögerungssignal zu übertragen;
eine Steuerung, die dazu verwendet wird, gemäß dem Förderzustand des Förderteils oder dem empfangenen Verzögerungssignal zu bestimmen, ob das Produkt zu einer vorgegebenen Position befördert wird, und, wenn das Produkt zu der vorgegebenen Position befördert wird oder das Verzögerungssignal empfangen wird, das Förderteil derart anzusteuern, dass dieses gemäß einer voreingestellten Verzögerungskurve verzögert wird, was Folgendes umfasst: Erfassen einer Restförderstrecke des Produkts und als Reaktion darauf, dass die Restförderstrecke des Produkts mit einer mit der voreingestellten Verzögerungskurve korrespondierenden Verzögerungsstrecke übereinstimmt, Verzögern des Produkts gemäß der voreingestellten Verzögerungskurve; wobei die voreingestellte Verzögerungskurve gemäß einem Modus einer Beförderung mit gleichmäßiger Verzögerung voreingestellt wird; und
ein Schneidteil, das dazu verwendet wird, das Produkt zu schneiden;
wobei die voreingestellte Verzögerungskurve durch die Formel S×b = (V₂²-V₁²)b/2a gegeben ist, wobei b ein voreingestellter Lag-Koeffizient, V₂ eine Geschwindigkeit vor der Verzögerung, V₁ eine Geschwindigkeit nach der Verzögerung, a eine Verzögerungsgeschwindigkeit und S ein theoretischer Wert der Verzögerungsstrecke ist;
wobei der Lag-Koeffizient b 1<b<1,5 erfüllt;
**dadurch gekennzeichnet, dass**, wenn das Produkt zu der vorgegebenen Position befördert wird oder das Verzögerungssignal empfangen wird, das Ansteuern des Förderteils derart, dass dieses gemäß einer voreingestellten Verzögerungskurve verzögert wird, Folgendes umfasst:
Erfassen einer Restförderstrecke des Produkts und als Reaktion darauf, dass die Restförderstrecke des Produkts mit einer mit der voreingestellten Verzögerungskurve korrespondierenden Verzögerungsstrecke übereinstimmt, Verzögern des Produkts gemäß der voreingestellten Verzögerungskurve; wobei die voreingestellte Verzögerungskurve gemäß einem Modus einer Beförderung mit gleichmäßiger Verzögerung voreingestellt wird;
wobei die Verzögerungsschnittsteuerungsvorrichtung ferner ein Kompensationsantriebsteil umfasst, das einen Kompensationsmotor und einen Schneidzylinder aufweist, wobei die Steuerung als Reaktion darauf, dass das Produkt gemäß der voreingestellten Verzögerungskurve verzögert wird, eine Kompensationsbewegungsstrecke des Schneidteils berechnet und das Kompensationsantriebsteil derart ansteuert, dass dieses das Schneidteil derart antreibt, dass dieses sich gemäß der Kompensationsbewegungsstrecke zu dem Produkt hin bewegt, damit das Schneidteil das Produkt schneidet;
wobei das Produkt eine positive und eine negative Platte und ein Separator einer Lithiumbatteriezelle ist.

## Revendications

1. Procédé de commande de coupe à décélération pour couper avec précision une position de coupe d'un produit, comprenant :
le préréglage d'une courbe de décélération conformément à un mode de transport à décélération uniforme ;
l'utilisation d'un appareil de commande de coupe à décélération pour une machine d'enroulement automatique, et l'appareil de commande de coupe à décélération comprenant :
une pièce de transport, servant à transporter le produit ; dans lequel le produit est enroulé sur un rouleau et le produit a une longueur totale ;
un élément détecteur, servant à détecter un état de transport de la pièce de transport et monté sur le rouleau ; dans lequel l'élément de détection est configuré pour détecter un angle de rotation du rouleau et délivrer une impulsion ;
un capteur, servant à détecter le produit et à délivrer un signal de décélération ;
un contrôleur, servant à déterminer que le produit a été transporté ou non jusqu'à une position prédéterminée en fonction de l'état de transport de la pièce de transport ou du signal de décélération reçu, et lorsque le produit a été transporté jusqu'à la position prédéterminée ou le signal de décélération a été reçu, à commander la pièce de transport pour la décélérer conformément à la courbe de décélération prédéfinie, et
une pièce de coupe, servant à couper le produit ;
dans lequel le procédé de commande de coupe à décélération comprend en outre :
en réponse au transport d'un produit jusqu'à une position prédéterminée ou à la réception d'un signal de décélération, la décélération du produit conformément à la courbe de décélération prédéfinie ; et
en réponse à la décélération du produit conformément à la courbe de décélération prédéfinie, la coupe du produit :
dans lequel le procédé comprend en outre : le préréglage d'un coefficient de traînée b, et l'obtention de la distance de décélération correspondant à la courbe de décélération préréglée selon une formule S×b (V₂²-V₁²)b/2a, où V₂ est une vitesse avant la décélération, V₁ est une vitesse après la décélération, a est une vitesse de décélération, et S est une valeur théorique de la distance de décélération ;
dans lequel le coefficient de traînée b satisfait 1<b<1,5 ;
caractérisé en que, en réponse au transport d'un produit jusqu'à une position prédéterminée ou à la réception d'un signal de décélération, la décélération du produit conformément à la courbe de décélération préréglée comprend :
l'acquisition d'une distance de transport restante du produit, et en réponse à la distance de transport restante du produit qui est associée à une distance de décélération correspondant à la courbe de décélération préréglée, la décélération du produit conformément à la courbe de décélération préréglée;
dans lequel l'acquisition de la distance de transport restante du produit comprend : le calcul d'une distance parcourue du produit en fonction d'une valeur de sortie mesurée d'un élément détecteur, et l'acquisition de la distance de transport restante du produit en fonction de la longueur totale du produit et la distance parcourue du produit ;
le procédé comprend également : en réponse à la décélération du produit conformément à la courbe de décélération préréglée, le calcul d'une distance de mouvement de compensation d'une pièce de coupe ; et le déplacement libre de la pièce de coupe jusqu'à une position de coupe du produit conformément à la distance de mouvement de compensation, et la coupe, par la pièce de coupe, de la position de coupe du produit ;
dans lequel le produit est une plaque positive et négative d'une cellule de batterie au lithium.

2. Procédé de commande de coupe à décélération selon la revendication l, dans laquelle le calcul d'une distance de mouvement de compensation d'une pièce de coupe comprend : le calcul de la distance de mouvement de compensation de la pièce de coupe en fonction de la distance parcourue du produit calculée sur la base de la valeur de sortie mesurée de l'élément détecteur.

3. Appareil de commande de coupe à décélération pour couper précisément une position de coupe d'un produit et pour une machine d'enroulement automatique, l'appareil de commande de coupe à décélération comprenant :
une pièce de transport, servant à transporter le produit ; dans lequel le produit est enroulé sur un rouleau et le produit a une longueur totale ;
un élément détecteur, servant à détecter un état de transport de la pièce de transport et monté sur le rouleau ; dans lequel l'élément de détection est configuré pour détecter un angle de rotation du rouleau et délivrer une impulsion ;
un capteur, servant à détecter le produit et à transmettre un signal de décélération ;
un contrôleur, servant à déterminer que le produit a été transporté jusqu'à une position prédéterminée en fonction de l'état de transport de la pièce de transport ou du signal de décélération reçu, et lorsque le produit a été transporté jusqu'à la position prédéterminée ou que le signal de décélération a été reçu, à commander la pièce de transport pour la décélérer conformément à une courbe de décélération préréglée, ce qui comprend : acquérir une distance de transport restante du produit, et lorsque la distance de transport restante du produit correspond à une distance de décélération correspondant à la courbe de décélération préréglée, décélérer le produit conformément à la courbe de décélération préréglée ; dans lequel la courbe de décélération préréglée est préréglée selon un mode de transport à décélération uniforme ; et
une pièce de coupe, servant à couper le produit ;
dans lequel la courbe de décélération préréglée est donnée par la formule S×b = (V₂²-V₁²)b/2a, où b est un coefficient de traînée préréglé, V₂ est une vitesse avant la décélération, V₁ est une valeur après la décélération, a est une vitesse de décélération, et S est une valeur théorique de la distance de décélération,
dans lequel le coefficient de traînée b satisfait 1<b<1,5 ;
**caractérisé en ce que**, lorsque le produit est transporté jusqu'à la position prédéterminée ou que le signal de décélération est reçu, le commande de la pièce de transport pour la décélérer conformément à une courbe de décélération préréglée comprend :
l'acquisition d'une distance de transport restante du produit, et lorsque la distance de transport restante du produit correspond à une distance de décélération correspondant à la courbe de décélération préréglée, la décélération du produit conformément à la courbe de décélération préréglée ; dans lequel la courbe de décélération préréglée est préréglée selon un mode de transport à décélération uniforme ;
dans lequel l'appareil de commande de coupe à décélération comprend en outre une pièce de commande de compensation comportant un moteur de compensation et un cylindre de coupe, dans lequel en réponse à la décélération du produit conformément à la courbe de décélération préréglée, le contrôleur calcule une distance de mouvement de compensation de la pièce de coupe et commande la pièce de commande de compensation pour commander à la pièce de coupe de se déplacer jusqu'au produit conformément à la distance de mouvement de compensation, de telle sorte que la pièce de coupe coupe le produit ;
dans lequel le produit est une plaque positive et négative et un diaphragme d'une cellule de batterie au lithium.
